# EUROPEAN PATENT APPLICATION

(11) **EP 1 986 123 A1**
(43) Date of publication of application: **29.10.2008**
(21) Application number: 07425252.9
(22) Date of filing: 27.04.2007
(51) Int. Cl.: G06F 21/06

(54) **Data survey device, integrated with an anti-tamper system**

(71) Applicant: Italdata Ingegneria Dell'Idea S.p.A., 00128 Roma (IT)
(72) Inventor: Boccacci, Roberto, c/o Italdata -, 00128 Roma (IT)
(74) Representative: Leone, Mario

(57) **Abstract**

A device (1) for the data survey and check, comprising: a case; and means for detecting a tampering of such a case, to verify the protection and the reliability of the collected data, guarantees the reliability of said means even when the device (1) is off, because it comprises: means for the storage and/or the generation of a piece of information (22), electrically supplied by a battery (21) housed inside said case (2) through an electric circuit; and means for interrupting (26) the electric supply to said means for the storage and/or the generation of a piece of information, activated by the opening of said case (2).

## Description

The present invention is related to a device for the data survey and check, integrated with an anti-tampering system, comprising a case and means for detecting a tampering of such a case, to verify the protection and the reliability of the collected data.

Devices performing various functions of checking and identification of data are known. The latter can be subject to encryption by a digital signature associating them to the identity of an operator answering for the reliability and the authenticity.

This kind of device can therefore be used in support of the patrolling and the investigation of the police.

However, it is extremely important to assure that the device has not been tampered in any way, but without restraining the operability thereof. Hence, the object of an anti-tampering integrated system is to prevent the sophistication of the collected and verified data and also to prevent an inappropriate use of this kind of device.

The object of the present invention is to provide an integrated device equipped with a reliable anti-tampering protection.

Such object is achieved by a device as above specified, wherein said means for detecting a tampering comprises:
* means for the storage and/or the generation of a piece of information, electrically supplied by a battery housed inside said case through an electric circuit;
* means for interrupting the electric supply to said means for measuring time, activated by the opening of said case.

The main advantage of the above defined device consists in achieving the immediate detection of the case opening form the check of the piece of information stored inside the case itself.

The present invention will be disclosed hereinafter according to one embodiment thereof, provided to an exemplificative and non-limitative purpose with reference to the annexed drawings wherein:
* Figure 1 shows a perspective view of a device for the data survey and check, integrated with an anti-tampering system, according to the invention, illustrating the functions thereof;
* Figure 2 shows a global perspective view of the device of figure 1 with an auxiliary item;
* Figure 3 shows a diagram illustrating an electric circuit operating in case of tampering of the device of figure 1; and
* Figure 4 shows an exploded perspective view of the device of figure 1.

With reference to the figures, a device arranged for the survey, the check and the transmission of identifying data is globally indicated as 1.

It comprises a rigid body 2, realized in anti-shock material and completely sealed, allowing to protect the inside even by weather elements. The body surface of the device 1 is soft to he touch and it is of the anti-slip kind. It can resist even to impacts and crashes. In particular, the body 2 can be consistent with IP54 standard, i.e. it can operate in presence of dust and water spray and it cannot be penetrated by pointed items.

According the general appearance thereof, the device 1 is a hand-held equipment, suitable to be grasped by one hand and provided with a graphic interface on the front surface thereof.

On such a surface, the device 1 comprises a screen 3 of the touch-sensitive kind (*touch screen*), thus operating as an input and output device. Again on this surface, a display on and off button 4 is present together with a keyboard 5 of the kind suitable for translating a cursor, with a cursor keypad, a central enter key and other two function keys.

The device 1 also includes sound detection and recording means, and a loudspeaker, represented as a microphone inlet 6 on the body 2 of the device 1. The microphone and the loudspeaker are suitable for the use as telephone.

The screen 3 allows a graphic output but also a graphic input through suitable function icons in graphic menus. Of course, either a conventional numeric keypad can be displayed, or an alphanumeric keyboard.

Such touch-sensitive screen 3, the keyboard 5 and the microphone 6 globally constitute input and output means of the device 1.

Further, function lights are present, globally indicated as 7, indicating different operational functions of the device 1.

On the side surfaces, plugs are present for the audio connection 8, the power supply 9 and a PC connection 10, e.g. of the USE type. However, it is intended that any data transfer plug can be provided, suitable for the transmission of data in a digital form. The audio connection plug 8 can be preferably connected to earphones of the telephone mentioned above.

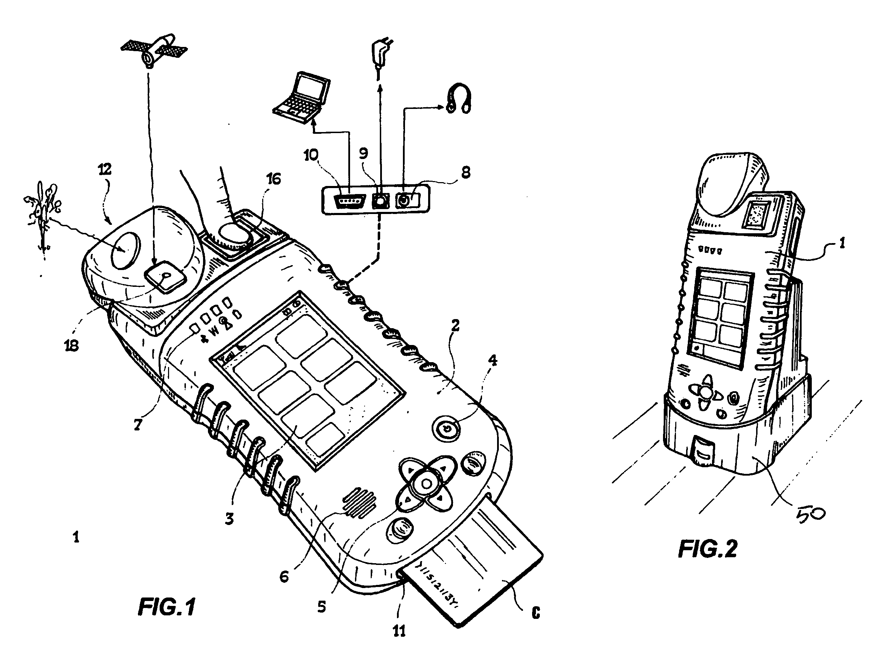

The device also has further plugs and can also operate through a suitable docking station 30 (Figure 2).

At the bottom side surface, the device 1 comprises a slit 11 for the introduction of a card C, and inside the device is provided with a sensor for the microchip reading.

Such a sensor can operate for the verification of documents equipped with microchip, containing the identification data of an individual. This sensor can anyway operate as means for identifying an operator using the device for the survey of evidence or the like.

On the opposite side surface, the device 1 comprises means for the taking of images 12 of the digital type, capable of photographic performances and of shooting video.

The device 1 further comprises means for the taking of fingerprints, including a scanning surface 16 of the silicon type. The latter, as it is apparent, can operate as means for identifying the operator using the device 1 for the survey of evidence or the like, e.g. by identifying one operator's fingerprint.

In particular, the operation of the device 1 can be available only after the introduction of a chip card wherein an identifying datum of the operator is recorded, e.g. a fingerprint, and after the verification of such a datum, e.g. through the scanning surface 16. In this manner, the device is not linked to only one operator but the latter must identify himself before using the device. Precautions of the same time may be adopted also for the validation of the collected data.

Then, positioning means is provided, namely of the satellite type, comprising an appropriately protected GPS antenna 18.

The device according to the present embodiment comprises cellular communication means, and to this purpose the device 1 comprises inside a pair of slots 19 receiving SIM cards, to put the device in condition to be operated as a portable cellular phone according to one of the available standards, e.g. GSM, UMTS and so on. It is intended that, through such communication means, the device can be linked to a network.

The inner part of the device 1 houses an antenna for the cellular communication, e.g. a GSM antenna, a battery and an encryption card, a memory card and a processor. A portable memory card can be provided, also for the transfer of the collected data.

The encryption card, together with the microprocessor, constitutes encryption means for identification sensitive data, to transmit them wireless in a completely safe manner. As a matter of fact, the code used as a basis for the information encryption is contained in said card, i.e. in a memory element thereof, and it is employed by the microprocessor 24 for translating said pieces of information in an encrypted file, protected from further modifications, which can be read by an apparatus including the same encryption code.

In particular, the task of the encryption card is to assign to a file a digital signature, advantageously of the type with asymmetric double key.

Among the capabilities thereof, the device also enumerates further wireless communication systems, namely according to the Wi-Fi® and the Bluetooth® standards.

The device 1 further comprises means for the storage and/or the generation of a piece of information, electrically supplied by a battery, which, in the present embodiment, comprises a digital clock which is suitable to assign a taking time to the collected data.

Finally, the device, as before mentioned enclosed within a sealed body, has means for detecting a tampering of said body, for ensuring the safety of the collected data.

Such means are referred to the opening of the case 2, which is formed by a pair of half-shells, front 24 and rear 25.

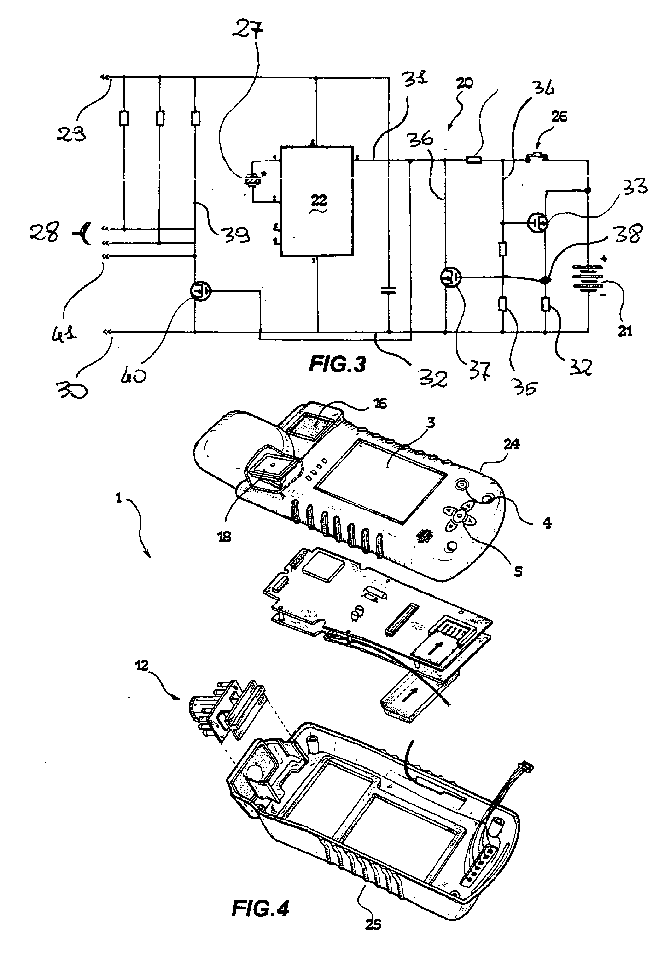

To enter the inside of the device it is required to separate said half-shells. The separation causes the opening of a switch 26 (figure 3) in a circuit 20 connecting the battery 21 to said digital clock embodied by a chip 22.

The means for detecting a tampering provides menas for the interruption the electric supply to said means for the storage and/or the generation of a piece of information, activated by the opening of said case 2, i.e. by the separation of said half-shells 24 and 25.

In detail, the means for the storage and/or the generation of a piece of information comprises said chip working as clock, due to an oscillator 27 connected to it, and to a RAM memory.

The piece of information which is generated is the time, which can be compared with the current time or with the time generated by a second clock in the device. Instead, the RAM memory stores a piece of information, e.g. a key code, only if it is powered, otherwise the same piece of information is lost.

Such a piece of information can be therefore compared with data inputted in the device 1, e.g. through a microchip card with an asymmetric key identifying the user, or through any other identification system.

In the present embodiment, both the storage and the generation of a piece of information are used, whose control substantially constitutes the anti-tampering verification.

The chip 22 is initialized through a gate 28, assigning a time reference and a digital key in the RAM memory. Both the oscillator 27 and the RAM memory work if electrically powered. Such powering is supplied through a main circuit wherein, in the diagram of figure 3, two terminals 29, 30 can be identified.

The main circuit supply power only when the device 1 is turn-on. Instead, when it is off, the battery 21 provides the power through two circuit branches 31, 32, said switch 26 being formed on one of them. Considering the very low powers involved, the battery may keep the chip 21 alive for a very long period of time, even for years.

Such switch 26 is part of the above mentioned means for interrupting the power supply of the chip 22, i.e. of the means for storing and/or generating a piece of information. Beside the switch 26, such means further comprises means for bypassing the supply terminals of the chip 22. The task of the by-pass (short-cut) is to obtain an immediate interruption of the electric power supply to the oscillator 27 and to the RAM memory.

As a matter of fact, by the sole switch 26, such interruption might not be immediate, because the electric capacities which are present in the circuit might power the chip for few minutes, even with the switch 26 opened. However, in the present context, for making impossible a tampering even fast, the absolute certainty of an instantaneous interruption of the power supply must be guaranteed, even after few milliseconds from the opening of the half-shells 24, 25.

Preferably, also the means for bypassing the power supply terminal of the chip 22 are operated by the opening of the half-shells 24, 25, i.e. at the opening of the switch 26.

Such activation is passive, because it is driver by the battery 21 itself as it is detailed hereinafter.

The battery 21 is included in a closed circuit comprising said switch 26, a first high resistance 32 and a transistor 33, conveniently of the MOSFET P-type, connected to a first transverse circuit leg 34 joining said pair of circuit branches 31, 32 or terminals power supplying the chip 21. Such leg 34 further includes second high resistances 35.

When the switch 26 is closed, *gate* and *source* of the first P-type MOSFET 33 are at the same potential, but when the switch is open, the gate is at a lower voltage and the MOSFET 33 is polarized.

Said pair of circuit branches 31, 32 are also connected to a second transverse circuit leg 36, comprising a second transistor 37, conveniently a second N-type MOSFET, which is closed by the voltage of the battery 21 when the switch 26 is open. In fact, the polarization of the first MOSFET 33 results in a passage of a very low current through said closed circuit of the battery 21, current which is limited by said first resistance 32. A junction 38 of this circuit is connected to the gate of the second MOSFET becoming conductive, bypassing the chip 22 through said second transverse leg 36. At this point, the chip is reset.

This security system must provide also a signal from the opening of the half-shells 24, 25, even when the device is turn-on and the chip is power supplied through said terminals 29, 30. To this purpose, the latter are connected to a third transverse circuit leg 39 comprising in turn a transistor, in particular a N-type MOSFET whose gate is connected to the power supply circuit including the battery 21, and it is hence polarized, allowing the passage of a reduced current through the third leg 39. Such current is detected through a pin 41, linked to the third leg 39.

In case of opening of the half-shells 24, 25, the opening of the switch 26 interrupts the current passage polarizing the third N-type MOSFET, closing said third leg 39. In this way, said pin 41 passes from a condition 0 to a condition 1 and allows the detection of the occurred opening of the half-shells 24, 25.

It is intended that the use of a device according the one as above described is particularly useful to the police in the public order management, at the custom check, in the collection of legal evidence and so on.

However, such a device can be used also in a civilian, administrative or private context as well, e.g. for having the reception of a hotel facility released from a fixed desk, for checking the exclusive admittance to a civilian, industrial, search facility and so on.

To the above disclosed device for the survey and the check of identification data, integrated with an anti-tampering system, a man skilled in the art, to the purpose of achieving further and contingent needing, can introduce additional and several modifications and variants, moreover all of them included within the protection scope of the present invention, as defined by the annexed claims.

## Claims

1. Device (1) for the data survey and check, comprising:
* a case; and
* means for detecting a tampering of such a case, to verify the protection and the reliability of the collected data,
**characterized in that** said means for detecting a tampering comprises:
* means for the storage and/or the generation of a piece of information (22), electrically supplied by a battery (21) housed inside said case (2) through an electric circuit;
* means for interrupting (26) the electric supply to said means for the storage and/or the generation of a piece of information, activated by the opening of said case (2).

2. Device (1) according to claim 1, wherein the case (2) is formed by a pair half-shells (24, 25), the separation of said half-shells (24, 25) resulting in the opening of a switch (26).

3. Device (1) according to claim 1 o 2, wherein the means for the storage and/or the generation of a piece of information comprises a digital clock.

4. Device (1) according to claim 3, wherein said digital clock is embodied by a chip (22) provided with an oscillator (27).

5. Device (1) according to any of the preceding claims, wherein the means for the storage and/or the generation of a piece of information comprises a RAM memory.

6. Device (1) according to claim 5, comprising means for identifying an operator.

7. Device (1) according to claim 6, wherein said means for identifying an operator comprises a microchip reading sensor.

8. Device (1) according to claim 1, wherein the means for the storage and/or the generation of a piece of information are power supplied, when the device (1) is turn-on, by a main circuit.

9. Device (1) according to any of the preceding claims, wherein the means for interrupting the electric supply (26) of said means for the storage and/or the generation of a piece of information comprises means for bypassing the power supply terminals of the means for the storage and/or the generation of a piece of information.

10. Device (1) according to claims 2 an 9, wherein the means for bypassing are activated by the opening of the half-shells (24, 25), i.e. by the opening of a switch (26) associated to them.

11. Device (1) according to claim 9 or 10, wherein the activation of the means for bypassing is driven by the battery (21) supplying the means for the storage and/or the generation of a piece of information.

12. Device (1) according to claim 11, wherein the means for the storage and/or the generation of a piece of information are power supplied by a pair of terminals (31, 32) connected by a transverse circuit leg (36), comprising a transistor (37) closing the transverse circuit leg at the interruption of the power supply of the means for the storage and/or the generation of a piece of information due to the voltage of the battery (21) power supplying the means for the storage and/or the generation of a piece of information.

13. Device (1) according to claim 12, wherein aid battery (21) is included in a closet circuit comprising said switch (26) and a further transistor (33) closing, due to the voltage of the battery (21), when the switch (26) is open causing the passage of current in said closed circuit, such passage resulting in the closing of said transistor (37) on said transverse circuit leg (36).

14. Device (1) according to claim 13, wherein the transistor (37) is a N-type MOSFET, whose gate is connected to said closed circuit.

15. Device (1) according to claim 13, wherein said further transistor (33) is a P-type MOSFET, whose gate is placed on a further transverse circuit leg (34) connecting said terminals (31, 32) power supplying the means for the storage and/or the generation of a piece of information.

16. Device (1) according to claim 8, wherein the terminals (29, 30) of the main circuit are connected by a transverse circuit leg (39) comprising a transistor (40) which is opened at the opening of the case (2) resulting in an interruption of the passage of current generating a tampering signal.

17. Device (1) according to claim 16, wherein said transistor (40) is a N-type MOSFET whose gate is connected to the power supplying circuit of the means for the storage and/or the generation of a piece of information including said battery (21) keeping it polarized.
